# FASCICULE DE BREVET EUROPEEN

(11) **EP 3 481 978 B1**
(45) Date de publication et mention de la délivrance du brevet: **22.11.2023**
(21) Numéro de dépôt: 17745371.9
(22) Date de dépôt: 04.07.2017
(51) Int. Cl.: D03D 13/00, D03D 15/00, D03D 15/20

(54) **TEXTILE HYBRIDE POUR LE RENFORCEMENT DE COMPOSITES**
HYBRIDGEWEBE ZUM VERSTÄRKEN VON VERBUNDSTOFFEN
HYBRID FABRIC FOR REINFORCING COMPOSITES

(30) Priorité: 05.07.2016 FR 1656435
(43) Date de publication de la demande: 15.05.2019
(73) Titulaire: Saint-Gobain Adfors, 92400 Courbevoie (FR)
(72) Inventeur: BOUCHARD, Jonas, 75018 Paris (FR); GARCIA, Alexandre, 0175 Oslo (NO)
(74) Mandataire: Saint-Gobain Recherche
(86) Numéro de dépôt international: PCT/FR2017/000137
(87) Numéro de publication internationale: WO 2018/007692

(56) Documents cités:
- EP-A1- 1 584 451
- JP-A- H08 300 527
- US-A- 4 950 530
- US-A- 5 538 781

## Description

### Domaine Technique

La présente invention se rapporte de manière générale au domaine des matériaux composites à matrice de polymère organique et, plus spécialement, au domaine des textiles de renforcement qui entrent dans la constitution de tels matériaux composites en étant noyés dans une matrice de polymère organique.

Plus précisément, l'invention concerne un textile hybride comprenant à la fois des fils en fibres inorganiques et des fils en fibres organiques naturelles, cotissées, cotressées ou co-tricotées les unes avec les autres.

L'invention concerne aussi l'utilisation d'un tel textile hybride en tant que renfort textile pour le renforcement d'une matrice de polymère d'un matériau composite.

L'invention trouve des applications, en particulier, dans la fabrication de composites pour l'industrie du transport, du sport, de la production d'énergie, du bâtiment, de la construction ou de l'industrie médicale.

### Arrière-plan Technologique

Actuellement, on utilise pour le renforcement de matériaux polymères des fibres de verre procurant une résistance optimum selon leur utilisation. Les fibres de verre, inorganiques, permettent notamment de réduire considérablement le poids d'une structure par rapport à l'acier.

En outre des fibres naturelles telles que le lin, le chanvre, le sisal, etc. peuvent être utilisées comme renfort de matériaux polymères. L'utilisation de ces fibres organiques naturelles permet encore un gain de poids additionnel par rapport à l'utilisation de fibres de verre.

Un tissu de renforcement fabriqué à partir de fibres naturelles est formé par entrecroisement de fils de chaîne, d'une part, et de fils de trame, d'autre part. Par contre, la torsion, le parcours des fils (qui est fonction de l'armure du tissu) et l'anisotropie des fibres peuvent conduire à une mauvaise orientation des fibres et donc à une altération des performances mécaniques par rapport à un empilement de couches unidirectionnelles. Par ailleurs, il peut y avoir, lors de la fabrication du composite avec un renfort fabriqué à partir de fibres naturelles, des problèmes de migration de la matrice au sein des fils de chaîne, au moment de l'imprégnation des fibres par la matrice. Par conséquent, un problème actuel est que l'utilisation des fibres organiques naturelles ne permet pas une reproductibilité des caractéristiques mécaniques du composite les contenant.

L'invention a pour objectif de fournir un renfort composite de faible poids, possédant des caractéristiques mécaniques facilement reproductibles.

### Art Antérieur

De manière classique, un matériau composite comprend une matrice structurante qui est faite de matière plastique moulable, et dans laquelle sont noyés un ou plusieurs renforts. Bien souvent, un tel renfort comporte une structure faite de fibres de renforcement artificielles, notamment inorganiques, tels que des fibres de verre, des fibres de carbone ou des fibres d'aramide.

Différents produits à base de fibres de verre tissées sont notamment décrits, par exemple, dans les documents US 4,581,053 et FR 3011255.

Dans le document US 2016/0047073, il est proposé un matériau textile hybride pour le renfort de composites fabriqués à partir de bandes de fibres unidirectionnelles non tissées de matériau inorganique (comme les fibres de carbone) entrelacées avec des bandes de matériau organique non-tissé (comme des fibres naturelles). Les fibres naturelles telles que le lin et le coton peuvent ainsi être utilisées comme renfort de matériaux polymères.

Dans la demande de brevet français FR 2949125, il est proposé un procédé de fabrication d'un renfort composite par enduction d'un fil de matière naturelle (lin et coton) avec un matériau polymère de façon à former un renfort composite qui est utilisé dans la fabrication de textiles non tissés.

Comme l'enseigne par ailleurs le brevet français FR 1204132 dans lequel il est divulgué un traitement pour des fibres naturelles destinées à renforcer une matière plastique, employer des fibres naturelles dans la constitution de renforts ou armatures pour matériaux composites est une idée relativement ancienne.

Dans la demande de brevet français FR 2898140, il est en outre proposé de mêler des fibres naturelles de lin à un autre matériau, à l'aide d'un jeu de peignes entraînés successivement, afin que ces fibres naturelles de lin puissent renforcer des pièces composites. Ce qu'on mêle aux fibres naturelles de lin peut notamment présenter la forme de fils faits de polypropylène ou d'une autre matière plastique synthétique. Du fait de leurs natures différentes, toutefois, les fibres naturelles de lin et les fils de polypropylène ne présentent pas le même comportement en traction, si bien que leur mélange au moyen de peignes ne peut pas conduire à un produit convenablement homogène.

Dans le document WO 2016/042556 A1, il est proposé un matériau textile hybride fabriqué à partir d'une couche de textile tissé et d'une couche synthétique qui est intégrée par différentes méthodes.

Le brevet US 5 538 781 divulgue des renforts textiles pour composites comprenant des fils à base de fibres de polyaramide, de carbone et de verre.

La demande EP 1 584 451 décrit des structures textiles de renforcement pour composites dans lesquelles des fils métalliques sont mélangés avec des fibres organiques ou minérales.

Le brevet GB 1 294 867 divulgue des textiles hybrides ignifuges comprenant au moins 85 % de fibres minérales non-oxydées et au plus 15 % en poids d'un type particulier de nylon ayant des propriétés d'autoextinction.

Enfin, le brevet US 5,326,628 décrit un matériau de friction à base d'un textile imprégné d'un matériau bitumineux et/ou d'une résine synthétique. Le textile est fabriqué à partir de fils constitués d'une âme à base de fibres céramiques ou de verre entourées d'une gaine organique en polymère synthétique. Ces fils sont combinés par torsion avec des fils métalliques.

Un textile hybride comprenant des fils en fibres inorganiques et des fils en fibres organiques naturelles selon le préambule de la revendication 1 est connu de JP H08300527 A. Il existe cependant toujours un besoin de développer des renforts pour composites légers permettant une meilleure reproductibilité des propriétés mécaniques des composites.

### Résumé de l'invention

L'invention a donc pour but de proposer un produit de renfort de composites léger, économique et qui présente des propriétés mécaniques améliorées et reproductibles de sorte qu'il puisse être utilisé dans l'industrie du transport, l'industrie du sport, l'industrie de production d'énergie, l'industrie du bâtiment, l'industrie de la construction et l'industrie médicale.

Il a été découvert qu'un tissu tissé hybride qui comprend des fils en fibres organiques naturelles et des fils en fibres inorganiques peut servir de renfort pour fabriquer des composites légers ayant d'excellentes propriétés mécaniques, comme une excellente résistance aux chocs.

La Demanderesse a ainsi mis au point un tissu hybride tissé, tressé ou tricoté comprenant ou constitué 2. des fils en fibres organiques naturelles et 2. des fils en fibres inorganiques permettant, lorsqu'il est utilisé en tant que renfort de matériaux composites, d'obtenir les propriétés mécaniques recherchées et un faible poids.

Ainsi, selon un premier aspect, l'invention propose un produit textile hybride selon la revendication 1.

Dans un deuxième aspect, l'invention concerne un préimprégné, c'est-à-dire un produit semi-fini, comprenant au moins un tel textile hybride et une résine thermoplastique ou thermodurcissable, la résine représentant de préférence de 20 à 45 % en poids, plus préférentiellement de 25 à 40 % en poids du préimprégné.

Dans un troisième aspect, l'invention concerne un renfort textile pour le renforcement d'une matrice de polymère d'un matériau composite qui comporte au moins un textile hybride selon le premier aspect ci-dessus, ce textile hybride étant perméable à la matrice de polymère du matériau composite.

Dans un quatrième aspect l'invention concerne l'utilisation d'un tel textile hybride, d'un tel renfort ou d'un tel préimprégné pour le renforcement d'une matrice polymère d'un matériau composite.

Dans un cinquième aspect l'invention concerne l'utilisation d'un tel textile hybride, d'un tel renfort ou d'un tel préimprégné pour la fabrication d'un composite comprenant une matrice de polymère organique et un renfort textile.

L'invention sera mieux comprise et d'autres caractéristiques et avantages de l'invention apparaîtront encore à la lecture de la description non limitative qui va suivre.

Celle-ci est purement illustrative et doit être lue en regard des dessins annexés sur lesquels :
- la Figure 1 représente quatre exemples de tissus hybrides tissés selon l'invention numérotés A, B, C et D. Le tissu A est une armure toile comprenant des fils de lin en chaîne et des fils de verre en trame ; le tissu B est une armure sergé 2x2 comprenant des fils de lin en chaîne et des fils de verre en trame ; les tissu C et D sont des armures toiles comprenant des fils de lin et des fils de verre en chaîne et uniquement des fils de lin en trame.
- la Figure 2 montre une vue très schématique d'un procédé de fabrication de composites par infusion sous vide.

### Description détaillée de modes de réalisation

Un premier aspect de l'invention se rapporte à un textile hybride tissé, tricoté ou tressé qui comprend des fils en fibres inorganiques et des fils en fibres organiques naturelles. Il est de préférence exempt de fibres organiques synthétiques. Il est de préférence exempt de fibres métalliques.

Le textile hybride selon l'invention est de préférence un textile hybride tissé.

En d'autres termes, le textile hybride de l'invention comprend des fibres inorganiques et des fibres organiques naturelles associées en fils qui, à leur tour, sont associés par tissage, tricotage ou tressage. Il est important de noter que, dans la structure du textile hybride de l'invention il y a toujours des fibres organiques naturelles et des fibres inorganiques entrant dans la composition des fils qui forment la structure du tissu hybride tissé.

Dans la présente description de modes de réalisation de l'invention les termes "produit textile", "textile" et "tissu" sont utilisés indifféremment.

On entend par "produit textile" ou "textile " ou "tissu" tout matériau susceptible d'être fabriqué par tissage, tricotage ou tressage, qui se divise en fils et/ou fibres et qui - à la différence des produits non-tissés dans lesquels les fibres sont maintenues de façon aléatoire - présente un entrecroisement ordonné de fils ou de fibres.

Le produit textile peut notamment être obtenu par tissage, à savoir par entrecroisement dans un même plan de fils disposés dans une direction dans le sens de la "chaîne" (appelés ci-après fils de chaîne) et de fils disposés dans une autre direction, le plus souvent perpendiculaire aux fils de la chaîne, dans le sens de la "trame" (appelés ci-après fils de trame). Le fil de trame est un fil s'étendant dans le sens de la largeur de la bande de textile. Le fil de chaîne s'étend dans le sens de la longueur. C'est l'entrecroisement de ces deux fils qui donne un tissu. Il est entendu que la trame est formée par un ou plusieurs fils parallèles et que la chaîne est aussi formée par un ou plusieurs fils parallèles. Le liage obtenu entre ces fils de chaîne et de trame se définit par une armure. Bien entendu, le tissage comprend une grande variété de méthodes qui donnent différents types d'armures (tissage toile, sergé, satin et leurs dérivés, tissage double face, tissage interlock, etc.)

La fabrication d'un textile hybride selon l'invention peut être mise en oeuvre dans une installation conventionnelle qui convient pour la fabrication de tissus en général, et en particulier pour la fabrication de tissus avec des fils à base de fibres inorganiques comme les fibres de verre.

La méthode par laquelle ces fils sont tissés ensemble influe sur les caractéristiques du tissu, notamment ses caractéristiques mécaniques.

Les variations de paramètres font ainsi varier les propriétés du tissu : le nombre de fils par unité de longueur utilisés dans le sens de la trame et de la chaîne (un ou plusieurs fils de trame et de chaîne, respectivement), la torsion, l'armure, l'angle entre les fils (par exemple entre les fils de la trame et ceux de la chaîne), etc.

L'homme du métier choisira la méthode et les paramètres de fabrication les plus appropriés à l'utilisation du textile de l'invention, selon les spécificités de l'application envisagée.

Dans une mise en oeuvre du procédé de tissage, pour le réglage des tensions entre les fils et afin de maintenir la tension constante entre les deux types de fils (fils composés de fibres organiques naturelles et fils composés de fibres inorganiques), le co-tissage peut être effectué en préparant les fils de chaîne de différentes manières :
- par ourdissage direct sur les métiers à tisser, les fils de chaîne étant disposés parallèlement entre eux directement sur l'ensouple à partir de bobines disposées dans un cantre ; ou,
- par ourdissage d'échantillonnage avec utilisation d'une double ensouple sur le métier à tisser au niveau d'un laboratoire, par exemple.

L'ourdissage peut également être sectionnel, en ce sens que les fils de chaîne sont parallélisés en section sur le tambour de l'ourdissoir. Une opération de dressage permet ensuite de transférer les fils de chaînes de l'ourdissoir à l'ensouple tout en conservant une tension constante.

Le produit textile de l'invention peut également être fabriqué par tricotage. Le tricotage est une technique utilisée pour fabriquer une étoffe par formation de noeuds, à partir d'un unique fil ou de plusieurs fils. Différentes techniques de tricotage sont à la disposition de l'homme du métier comme, entre autres, le tricotage trame ou le tricotage à mailles jetées ou chaîne, ce dernier permettant la réalisation d'articles indémaillables.

Les fibres organiques sont des fibres organiques naturelles d'origine Les fibres végétales sont des fibres de lin.

Les "fibres inorganiques" sont des fibres de verre.

Les fibres organiques et les fibres inorganiques sont rassemblées pour former un ensemble long en forme de fils. Ainsi, le fil utilisé dans le produit textile de l'invention correspond à tous produits issus des industries de la filature, constituant un assemblage de fibres ayant subi un traitement, comme la torsion, apte à assurer la cohésion entre les fibres. On pourra ainsi utiliser pour l'invention un fil à proprement parler, un ruban, un retord, un double retord, un câble, etc.

Les fibres organiques naturelles peuvent être traitées pour faciliter leur utilisation dans un tissu de renfort de matériau composite.

Ainsi, pour une utilisation en tant que renfort de matériau composite, les fibres végétales sont prélevées dans la chaîne de transformations de l'industrie textile. Cette filière industrielle a développé des techniques pour séparer les fibres du reste de la plante. Les techniques utilisées pour séparer et présenter les fibres sont, notamment :
- le rouissage : hydrolyse de la pectose qui lie les fibres. Cette opération peut s'effectuer dans l'eau (courante ou non), au sol ou industriellement à l'aide de produits chimiques ou d'enzymes. Pour le lin, le rouissage au sol est le plus courant ;
- le broyage : fragmentation des parties ligneuses ;
- le teillage : séparation des fragments ligneux du bois de la plante ; et
- le peignage et le cardage : démêlage des fibres.

Pour obtenir des matériaux composites performants, des traitements complémentaires peuvent être nécessaires : séparation des fibres, nettoyage de leur surface, amélioration du mouillage des fibres par le polymère, obtention d'une liaison fibre/matrice de qualité et, dans certains cas, diminution du caractère hydrophile. Le mouillage est une condition nécessaire mais non suffisante pour obtenir une bonne adhérence de la matrice polymère au renfort textile. Dans un matériau composite, l'adhérence fibre/matrice joue un rôle très important sur la transmission des contraintes entre les fibres et la tenue au vieillissement. Le choix du traitement ou des traitements se fait en fonction de la nature des fibres. Ces traitements utilisent différents produits ou "additifs".

Des exemples de traitements sont :
- des traitements chimiques pour modifier la composition de surface des fibres et créer des liaisons chimiques avec le polymère, en se servant, par exemple, de composés tels que les silanes, les isocyanates et les acides carboxyliques ;
- des traitements physico-chimiques tels que l'ozonation, le plasma froid et l'irradiation sous faisceau électronique ;
- un traitement alcalin à la soude pour enlever la lignine, la pectine et les cires recouvrant la surface externe des fibres naturelles. Ce type de traitement provoque une augmentation de la rugosité de surface, un gonflement, une stabilisation des fibres et une réduction du caractère hydrophile ;
- des traitements d'acétylation de la cellulose ou de l'hémicellulose avec de l'anhydride acétique afin d'augmenter la stabilité dimensionnelle et la résistance à la dégradation environnementale ;
- des traitements thermiques à une température supérieure à 180°C. Ces types de traitements, réalisés sous atmosphère inerte, agissent sur les propriétés des hémicelluloses et de la lignine, ce qui améliore à la fois la stabilité dimensionnelle et la durabilité ;
- des traitements pour améliorer la tenue au feu ; et,
- des traitements enzymatiques permettant, par le choix des enzymes, d'attaquer les lamelles mitoyennes assurant la cohésion au sein des faisceaux de fibres et donc de faciliter leur extraction et de modifier leur surface.

Les fibres organiques et les fibres inorganiques peuvent aussi être traitées pour améliorer l'adhérence fibre/matrice avec un traitement chimique de surface appelé ensimage. L'ensimage consiste à appliquer une composition d'ensimage comprenant au moins un agent permettant d'assurer la protection contre l'abrasion, notamment lors du passage des fils dans les filières du métier à tisser, augmenter la rigidité des filaments, améliorer l'interface fibre/matrice et préparer la liaison (par exemple verre/résine), faciliter l'imprégnation par la résine lors de la mise en oeuvre et éliminer des charges électrostatiques.

Dans certains modes de réalisation, les fibres organiques et/ou inorganiques qui forment les fils des tissus hybrides selon l'invention sont ainsi traités avec une composition d'ensimage.

La quantité d'ensimage (extrait sec), déposée sur les fibres organiques et/ou inorganiques du textile tissé hybride de l'invention, est de l'ordre de 0,1 à 10 %, de préférence de 0,3 à 3 % en poids. Le liquide vecteur généralement employé est l'eau, qui représente 85 à 95 % de la composition d'ensimage.

Pour les compositions d'ensimage pour fils de verre, on peut se référer aux agents d'ensimage décrits dans l'ouvrage "Fibres de verre de renforcement" Technique de l'ingénieur, traité « Plastiques et Composites ». A titre d'exemple, l'ensimage utilisé dans la présente invention comprend les éléments suivants :
- un agent filmogène (3 à 10 %) qui lie les filaments entre eux et de ce fait apporte au fil intégrité et protection, et qui permettra l'imprégnation par une matrice. Il est principalement composé de poly(acétate de vinyle), de résines époxy ou polyester, d'amidon, etc. ;
- des lubrifiants (0,05 à 1 %) qui ont un rôle de protection contre l'abrasion lors des manipulations du fil. Leurs composants principaux sont des tensioactifs d'ammonium et des amines ;
- un agent antistatique (0 à 0,3 %) qui a pour rôle l'élimination des charges électrostatiques. Il s'agit d'un sulfonate d'alkylaryle ou d'un sel d'ammonium quaternaire ; et,
- un agent de couplage (0,2 à 0, 7 %) qui permettra la création de liaisons avec d'une part la matrice et d'autre part la fibre, c'est généralement un organosilane, un titanate ou un zirconate.

Les fils de verre utilisés dans la présente l'invention sont nécessairement pourvus d'un ensimage du type précité. Cela résulte de leur procédé de fabrication qui comprend une étape obligatoire d'application d'une composition d'ensimage sur les filaments pendant leur étirement et avant qu'ils soient rassemblés en un ou plusieurs fils comme expliqué plus loin.

Ainsi, on parle dans la présente description "d'additifs " pour désigner de manière non limitative tout produit ajouté selon les traitements mentionnés ci-dessus : notamment un ensimage tel que mentionné précédemment mais aussi des polymères fonctionnalisés, des colorants, des absorbants d'UV, des adoucissants, des retardateurs de flamme etc. conférant des propriétés particulières au tissu de l'invention.

L'additif est de préférence choisi parmi un ensimage, des polymères fonctionnalisés, des colorants, des absorbants d'UV, des adoucissants, retardateurs de flamme.

Dans un mode de réalisation le textile hybride selon l'invention est caractérisé en ce que les fibres organiques sont traitées avec une composition d'ensimage, étant entendu que les fibres inorganiques sont nécessairement traitées avec une composition d'ensimage comme indiqué précédemment.

Le tissu hybride de l'invention peut comprendre en plus des fibres organiques naturelles et inorganiques, de 0,1 % à 20 % en poids d'un ou plusieurs additifs, de préférence un ensimage, notamment de 0,2 à 10 % en poids d'un ou plusieurs additifs, de préférence un ensimage, notamment de 0,1 à 5% en poids d'un ou plusieurs additifs, de préférence un ensimage.

Les fils de fibres inorganiques utilisés dans la présente invention sont, entre autres
a) des fils constitués de filaments continus parallèles et sans torsion (ou fils de base) ; ces produits sont appelés silionnes pour le verre ; ou,
b) des assemblages de plusieurs fils de base appelés stratifils (ou « rovings » en anglais).

Les fils précités sont des fils sans torsion. Bien qu'étant moins performants, il entre également dans le cadre de l'invention des fils retordus qui présentent au moins 5, au moins 10, au moins 15 ou au moins 20 tours/m.

Des fibres de verre utilisables selon l'invention et leur procédé de fabrication sont décrits, par exemple, dans l'ouvrage "Fibres de verre de renforcement", Techniques de l'ingénieur, Traité « Plastiques et Composites » ou dans le document FR2910462. Les fils de verre sont élaborés de manière connue par étirage mécanique de filets de verre fondu s'écoulant des multiples orifices d'une filière pour former des filaments qui sont ensuite rassemblés en un ou plusieurs fils, chacun collecté sur un manchon supporté par un bobinoir. Le verre entrant dans la constitution des fils peut être de tout type, par exemple E, C, E-CR, D, R, A, S, S2, AR (alcali-résistant). On préfère le verre E.

Le diamètre des filaments de verre constituant les fils peut varier dans une large mesure, par exemple de 5 à 24 µm, de préférence de 6 à 16 µm et mieux de 8 à 13 µm. De la même manière, de larges variations peuvent survenir dans la masse linéique du fil qui peut aller de 10 à 10000 tex et de préférence de 100 à 2500 tex.

Selon l'invention les fibres inorganiques sont des fibres de verre, les fibres organiques sont des fibres de lin. L'additif est dans ce cas un ensimage appliqué sur les fibres ou les fils organiques. De préférence le textile hybride contient de 35 à 45 % en poids de fibres de verre, de 40 à 55 % en poids de fibre de lin et de 1 à 5 % en poids d'ensimage.

Comme mentionné antérieurement, dans la structure tissée du textile hybride de l'invention, il doit toujours y avoir des fibres organiques naturelles et des fibres inorganiques dans la composition des fils qui forment ledit tissu. La nature et la proportion des fibres organiques et des fibres inorganiques dans les fils qui forment la structure du tissu hybride tissé de l'invention seront choisies selon l'utilisation et la méthode de tissage du tissu de l'invention.

Les fibres organiques représentent 70 à 90% de la masse totale des tissus hybrides tissées.

Les fibres inorganiques représentent entre 10 à 30% en poids de la masse totale des tissus tissés.

Selon un mode de réalisation particulier, le textile hybride selon l'invention est un textile tissé obtenu par tissage.

Le tissage est l'entrecroisement, dans un même plan, de fils disposés dans une première direction dans le sens de la "chaîne" et de fils disposés dans une autre direction, de préférence perpendiculaire aux fils de la chaîne, dans le sens de la "trame". De multiples combinaisons peuvent être envisagées mais le tissu final aura toujours des fibres organiques naturelles et des fibres inorganiques co-tissées.

Dans une réalisation particulière, le textile hybride de l'invention est obtenu par tissage et est caractérisé en ce que la chaîne et/ou la trame comprennent plus d'un fil par unité de longueur, c'est-à-dire 2, 3, 4, 5, 6, 7, 8, 9, 10, 11, 12, 13, 14, 15 16, 17, 18 , 19, 20, de 20 à 30, de 30 à 40, de 40 à 50, de 50 à 60, de 60 à 70, de 70 à 100 fils par centimètre.

En tenant compte que l'industrie de filature peut fournir des fils avec une masse linéique (masse en grammes /1000 mètres de fil) très variable (par exemple de 34 à 10000 tex), il est possible d'obtenir des tissus avec un grammage souhaité. Par exemple en combinant des fils de masse linéique réduite dans le sens de la chaîne et/ou de la trame on peut obtenir de tissus de faible grammage.

Ainsi, dans un mode de réalisation préféré la chaîne comprend un ou plusieurs fils à base de fibres organiques et/ou un ou plusieurs fils à base de fibres inorganiques et/ou un ou plusieurs fils hybrides ; et la trame comprend un ou plusieurs fils à base de fibres organiques et/ou un ou plusieurs fils à base de fibres inorganiques et/ou un ou plusieurs fils hybrides. Les différentes possibilités et compositions des différents fils (fils organiques, inorganiques et hybrides) ont été décrites précédemment.

De manière générale les fils utilisés dans la présente invention ont une masse linéique entre 500 et 3000 Tex. Avantageusement, la masse linéique des fils organiques est plus faible que celle des fils inorganiques.

Les textiles hybrides tissés présentent avantageusement :
- une épaisseur inférieure à 30 mm, de préférence comprise entre 0,2 mm et 5 mm, notamment entre 1 mm et 4, notamment entre 1,5 et 3 mm, de préférence entre 2 et 3,5 mm et/ou
- une masse surfacique comprise entre 30 et 3000 g/m², de préférence comprise entre 100 et 2000 g/m², de préférence comprise entre 100 et 1200 g/m², de préférence comprise entre 100 et 1000 g/m².

L'invention a aussi pour but de permettre la fabrication de matériaux composites renforcés par les textiles hybrides de l'invention.

Pour cela, plusieurs textiles hybrides selon l'invention peuvent être superposés et assemblés. Chaque textile hybride ainsi que l'assemblage de textiles hybrides sont de préférence perméables au polymère formant la matrice polymérique. Cette perméabilité est assurée par une structure assez lâche laissant aux fils une certaine mobilité, voire même des trous ou mailles ouvertes permettant le passage de la composition de polymère.

Par ailleurs, afin d'être perméable à la matrice polymère, le textile hybride selon l'invention est exempt d'un liant ou d'un apprêt susceptible de boucher les trous ou mailles ouvertes.

Le textile hybride selon l'invention ou l'assemblage de textiles hybrides selon l'invention peut être imprégné directement avec une matrice polymère en vue de la formation d'un composite, ou bien il peut servir à la préparation d'un produit semi-fini, appelé pré-imprégné (en anglais *prepreg*)*,* qui sera noyé dans la matrice polymère.

Le préimprégné est de préférence fabriqué par imprégnation du textile hybride avec une composition de résine thermodurcissable ou thermoplastique,. Cette imprégnation préalable du textile hybride par une résine organique facilite de manière connue la fabrication du composite en améliorant la compatibilité du renfort textile avec la matrice polymère.

La quantité de résine dans le prepreg est généralement comprise entre 10 et 45 % en poids, de préférence entre 20 et 40 % en poids rapporté au poids total du préimprégné.

Dans un mode de réalisation particulier, le composite peut comprendre plusieurs couches de tissu selon l'invention tels que précédemment décrits. Eventuellement, des couches de textile hybride de l'invention peuvent être utilisées en combinaison avec des couches de textile non-tissé ou d'autres textiles non-hybrides.

Par ailleurs, le composite peut être collé (laminé) sur des panneaux en mousse, en bois ou en nid d'abeille pour la réalisation de structures sandwich.

Selon un mode de réalisation particulier, le renfort de l'invention a au plus 50 couches de textile hybride de l'invention, notamment de 2 à 10, notamment de 5 à 20, notamment de 20 à 30 couches, et de préférence entre 4 et 15 couches. Le nombre de couches sera choisi selon l'application souhaitée et le type de composite.

Le textile hybride tissé de l'invention entrant dans la constitution du renfort de l'invention présente une masse surfacique qui varie de 30 à 3000 g/m², de préférence de 100 à 2000 g/m², avantageusement de 100 à 1200 g/m² et mieux encore de 100 à 1000 g/m².

La matrice peut être thermoplastique comme par exemple : les polyesters tels que le poly(éthylène téréphtalate) (PET) ou le poly(butylène téréphtalate) (PBT), les résines vinylesters, les polyuréthannes (PU), les poly(bismaléimides), le poly(acide lactique) (PLA), les poly(hydroxy alcanoates) (PHA), les polyamides (PA), le polypropylène (PP), les polyéthylènes (PE), le polycarbonate (PC), le polychlorure de vinyle (PVC).
II est à noter que la température de dégradation des fibres végétales est comprise entre 200°C et 230°C.

La matrice peut être aussi à base de résines thermodurcissables telles que les résines urée-formaldéhyde (UF), mélamine-formaldéhyde (MF) ou phénol-formaldéhyde (PF), les polyépoxydes ou époxydes (EP), les polybismaléimides (BMI), les polyimides thermodurcissables (PIRP), les polyuréthanes réticulés (PUR), les polyesters insaturés (UP), les vinylesters (VE), les élastomères vulcanisés, les polyisocyanurates et les polysiloxanes.

Dans toute la description qui précède et dans les revendications, les expressions « comprenant un » et « comportant un » doivent être comprises comme étant synonymes respectivement des expressions « comprenant au moins un » et « comportant au moins un » sauf si le contraire est spécifié.

Dans toute la description, les plages de valeurs sont comprises comme incluant les bornes, à défaut d'indication contraire.

### Procédés de mise en forme du composite de l'invention

Le composite de l'invention comprenant un textile hybride tissé de l'invention peut être obtenu par tout type de procédé de fabrication de composite qui donne un composite et dans lequel la résine est capable de pénétrer dans le tissage du renfort de l'invention et de l'imprégner. Il peut par exemple s'agir de procédés par extrusion, infusion sous vide ou non, moulage par injection basse pression de résine liquide (RTM), *"hand lay up",* SMC (*sheet moulding compound*)*,* autoclave et *bulk moulding* (BMC).

Le composite final doit généralement présenter la meilleure résistance aux chocs possible, le moins de porosité incontrôlée possible (pas de bulles de gaz involontairement emprisonnées), et le meilleur aspect de surface possible, notamment le chant (face étroite) des pièces finales.

Les avantages du renfort composite de l'invention résident dans son faible poids, comparable au faible poids d'un textile à base de fibres naturelles, et dans ses bonnes caractéristiques mécaniques, par exemple une excellente résistance aux chocs.

L'invention trouve des applications, en particulier, dans la fabrication de composites pour l'industrie du transport, l'industrie du sport, l'industrie de l'énergie, du bâtiment, de la construction, l'industrie médicale, entre autres. Dans ces applications la réponse aux contraintes de résistance mécanique doit être obtenue tout en conservant des objets légers.

### Exemples

Les avantages présentés par les tissus selon l'invention, les renforts selon l'invention et les composites selon l'invention, seront mieux appréciés à travers les exemples suivants, illustrant la présente invention sans toutefois la limiter.

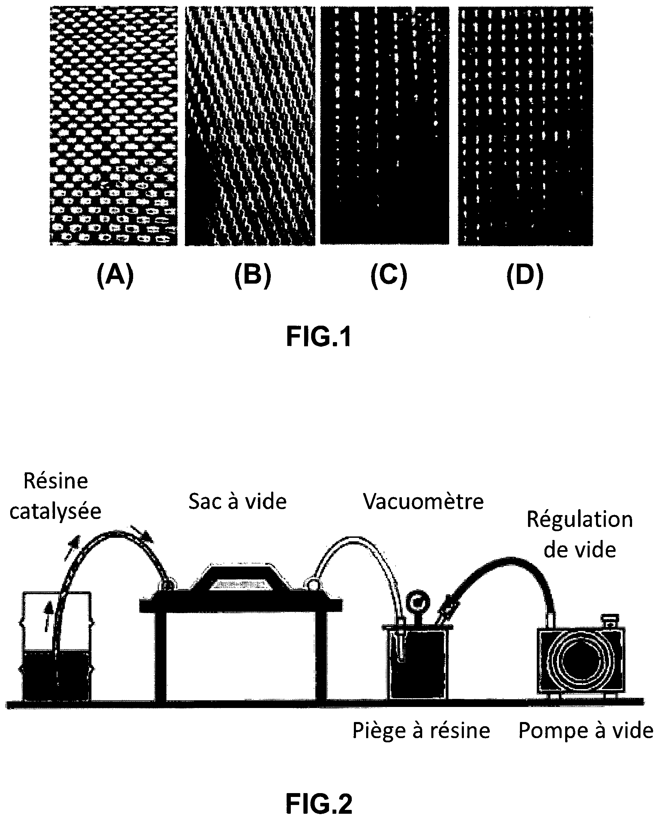

On a représenté à la Figure 1 quatre exemples de tissus tissés hybrides avec des fils de lin et des fils de verre cotissées. Dans ces exemples, différentes méthodes de co-tissage ont été utilisées (toile, sergé 2/2) pour obtenir cette association de fibres.

Les fils utilisés sont :
- des fils de lin sans torsion - Nattex de 1300 tex de chez DEHONDT
- des fils de verre sans torsion - Zerotwist - de chez Vetrotex - 2400 tex (EC22 2400 T99C) (fil de trame) ; et/ou,
- des fils de verre sans torsion - Zerotwist - de chez Vetrotex - 2040 tex (EC20 2040 T99C) (fil de chaîne).

Les fils de lin ont un ensimage permettant leur tenue mécanique et leur cohésion lors du tissage dans un métier à tisser. Cet ensimage est également compatible avec la matrice polymère utilisée lors de la préparation du composite final.

Le Tableau 1 ci-dessous rassemble différents échantillons numérotés de B1 à B10. Ce tableau présente les propriétés des différents tissus, à savoir, dans l'exemple considéré ici : la référence de chaque échantillon dans laquelle la lettre F désigne le lin, la lettre G désigne le verre et le numéro désigne le grammage exprimé en g/m², le type de chaîne, le type de trame et le type d'armure (P pour armure toile et T pour armure sergé).

Les échantillons comparatifs B1 et B4 sont des tissus en toile (P) et en sergé 2/2 (T) composés uniquement de lin de 1300 tex.

Les échantillons comparatifs B7 et B8 sont des tissus en toile (P) et en sergé 2/2 (T) composés uniquement de fils de verre de 2400 tex.

Les échantillons comparatifs B9 et B10 sont des tissus non-tissés respectivement de lin et de verre avec deux types de grammage, à savoir 350 g/m² et 600 g/m², respectivement.

Les échantillons selon l'invention B2, B3, B5 et B6 sont de textiles tissés hybrides de lin et de verre.

L'échantillon B2 est un textile hybride en armure toile avec un grammage de 850 g/m² et composé de fils de lin (1300 tex) en chaîne et de fils de verre (2400 tex) en trame.

L'échantillon B3 est un textile hybride en armure sergé 2/2 avec un grammage de 850 g/m² et composé de fils de lin (1300 tex) en chaîne et de fils de verre (2400 tex) en trame.

L'échantillon B5 est un textile hybride en armure toile avec un grammage de 575 g/m² et composé de 2 fils de lin (1300 tex) pour 1 fil de verre (2040 tex) en chaîne, d'une part, et de fils de lin (1300 tex) en trame, d'autre part.

L'échantillon B6 est un textile hybride en armure toile avec un grammage de 550 g/m² et composé de 1 fil de lin (1300 tex) pour 1 fil de fibre de verre (2040 tex) en chaîne, d'une part, et de fils de lin (1300 tex) en trame, d'autre part.

**Tableau 1 : Propriétés des textiles tissés et non tissés**

| Echantil-Ion N° | Ref. | Grammage (g/m²) | Chaîne | Trame | Armure |
|---|---|---|---|---|---|
| **B1** | P1 F/F 500 | 500 | Lin 1300 tex - 1.5 fils/cm | Lin - 1300 tex - 2.4 fils/cm | Toile |
| **B2** | P1 F/G 850 | 850 | Lin 1300 tex - 1.5 filslcm | Verre - 2400 tex - 2.7 fils/cm | |
| **B3** | T2 F/G 850 | 850 | Lin 1300 tex - 1.5 fils/cm | Verre - 2400 tex - 2.7 fils/cm | Sergé 2/2 |
| **B4** | T2 F/F 450 | 450 | Lin 1300 tex - 1.5 fils/cm | Lin 1300 tex - 2.4 fils/cm | |
| **B5** | P1 FGIF 575 | 575 | Mix 2 fils de Lin 11 fils de verre - 1.5 fils/cm | Lin 1300 tex - 2.4 fils/cm | Toile |
| | | | Lin: 1300 tex / Verre 2040 tex | | |
| **B6** | P1 FGIF 550 | 550 | Mix 1 fils de Lin 11 fils de verre - 1.5 fils/cm | Lin 1300 tex - 2.4 fils/cm | |
| | | | Lin : 1300 tex/Verre 2040 tex | | |
| **B7** | P1 G/G 1000 | 1000 | Verre 2040 tex -1.5 fils/cm | Verre - 2400 tex - 2.7 fils/cm | |
| **B8** | T2 G/G 1100 | 1100 | Verre 2040 tex - 1.5 filslcm | Verre - 2400 tex - 2.7 fils/cm | Sergé 2/2 |
| **B9** | V3 F 350 | 350 | | | Non-tissé |
| **B10** | V3 G 600 | 600 | | | Non-tissé |

Les différents textiles (B1 - B10) décrits dans le Tableau 1 sont utilisés comme renforts pour la fabrication de dix composites R1 à R10 par la technique d'infusion sous vide. Dans l'exemple illustré, la résine est un polyester orthophtalique (NORSODYNE 115284 pouvant être obtenu auprès de POLYNT Composites). Cette résine, qui est classée dans les ortho-résines, est un matériau coulé à froid à une température de 20 °C environ. Le matériau catalyseur utilisé est un peroxyde organique (PMEC qui peut être obtenu auprès de SF Composites) et l'accélérateur utilisé est de l'octanoate de Cobalt avec 6 % d'oxygène actif que l'on peut se procurer auprès de FOURNIER Composites.

On obtient ainsi des structures composites renforcées par les textiles du tableau 1. On a représenté dans le Tableau 2 les composites obtenus (R1 à R10) avec leurs caractéristiques telles que la quantité de lin (en pourcentage en poids), la quantité de verre (en pourcentage en poids), le nombre de couches de tissu, l'épaisseur du renfort (en mm), le pourcentage en volume de renfort et la densité du composite obtenu.

**Tableau 2 : Caractéristiques des différentes composites**

| Echantill on N° | Nomenclature /Ref.tissu | Poids LIN (wt.%) | Poids Verre (wt.%) | Densitè de renfort fibreux | Nb de couches |
|---|---|---|---|---|---|
| **R1** | P1 F/F 500 | 100 | 0 | 1.5 | 4 |
| **R2** | P1 F/G 850 | 23 | 77 | 2.22 | 4 |
| **R3** | T2 F/G 850 | 23 | 77 | 2.22 | 4 |
| **R4** | T2 F/F 450 | 100 | 0 | 1.5 | 4 |
| **R5** | P1 FG/F 575 | 81 | 19 | 1.63 | 4 |
| **R6** | P1 FG/F 550 | 73 | 23 | 1.7 | 4 |
| **R7** | P1 G/G 1000 | 0 | 100 | 2.6 | 4 |
| **R8** | T2 G/G 1100 | 0 | 100 | 2.6 | 4 |
| **R9** | V3 F 350 | 100 | 0 | 1.5 | 2 |
| **R10** | V3 G 600 | 0 | 100 | 2.6 | 4 |

| Echantillon N° | Epaisseur de renfort (mm) | Epaisseur composites( mm) | %Volume de renfort | Densité ducomposite | |
|---|---|---|---|---|---|
| **R1** | 1.352 | 4.64 | 29 | 1.287 | |
| **R2** | 1.517 | 4.22 | 36 | 1.568 | |
| **R3** | 1.517 | 3.67 | 41 | 1.623 | |
| **R4** | 1.352 | 4.07 | 33 | 1.300 | |
| **R5** | 1.336 | 4.04 | 33 | 1.342 | |
| **R6** | 1.327 | 4.18 | 32 | 1.357 | |
| **R7** | 1.468 | 3,90 | 38 | 1.727 | |
| **R8** | 1.468 | 3.79 | 39 | 1.743 | |
| **R9** | 0467 | 3.47 | 13 | 1.240 | |
| **R10** | 0.923 | 2,60 | 36 | 1.697 | |

On va maintenant décrire la manière de déterminer les propriétés des textiles considérés.

Différents tests mécaniques ont tout d'abord été réalisés pour évaluer la performance des composites renforcés avec les textiles tissés hybrides de l'invention en comparaison de tissus comprenant 100% de lin ou 100% de verre et de textiles non-tissés.

Des essais permettant d'évaluer le module d'élasticité en traction des composites ont été réalisés selon les spécifications de la norme NF EN ISO 527-4 juillet 97- Type 3.

Les conditions d'essais associées pour le test de traction sont ainsi les suivantes :
- Conditions d'essai de la traction selon la norme NF EN ISO 527-4 juillet 1997- Type 3 ;
- Conditions d'essai : 21,6°C, 51,3% RH ;
- Conditionnement : Sec ;
- Précharge : 1 MPa ;
- Vitesse d'essai : 2 mm/min ; et,
- L0 - course standard : 50 mm.

Des essais permettant d'évaluer le module d'élasticité en flexion des composites ont été réalisés selon les spécifications de la norme NF EN ISO 14125.

Les normes et conditions d'essais associées pour le test de flexion sont les suivantes :
- Conditions d'essai de la flexion 3 points selon la norme NF EN ISO 14125 :
   - Conditions d'essai : 21,5°C, 50.5% RH
   - Conditionnement : Sec
   - Précharge : 10N
   - Vitesse d'essai : 5 mm/min
   - Distance entre appuis : 81 mm
   - Rayon des rouleaux d'appui : 5 mm
   - Rayon du poinçon de flexion : 5 mm
   - Ecart entre les palpeurs : 96 mm

Le Tableau 3A rassemble les valeurs des modules d'élasticité en traction obtenues par mesure dans le sens chaîne et trame respectivement.

Le Tableau 3B rassemble les valeurs des modules d'élasticité en flexion obtenues par mesure dans le sens chaîne et trame respectivement.

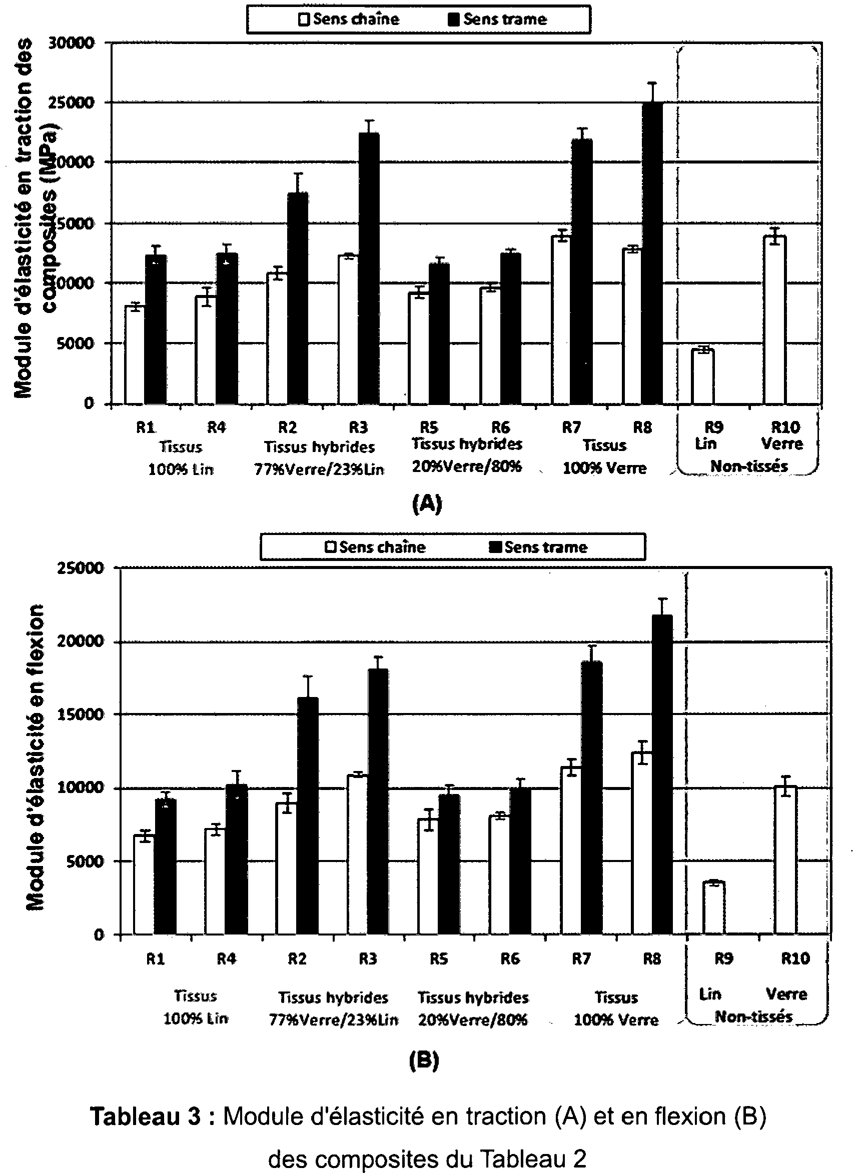

On note que les composites avec renfort tissé (échantillons R1-R8) présentent une résistance en traction qui est supérieure à celle des composites avec renforts non-tissés (échantillons R9 et R10), en particulier pour les non-tissés à base de fibres de lin (R9).

Les composites avec renfort tissé à 100% de verre (échantillons R7 et R8) ou avec de grands pourcentages de verre (échantillons R2 et R3) présentent un module d'élasticité en traction et un module d'élasticité en flexion relativement similaires, c'est-à-dire le remplacement d'une partie des fibres de verre par des fibres naturelles, plus légères, n'entraine pas une perte significative des propriétés mécaniques.

Afin d'illustrer les avantages des composites avec les renforts selon l'invention, la résistance aux chocs des différents composites a été mesurée. Des essais ont ainsi été réalisés pour chaque tissu comprenant un renfort selon l'invention (R5 et R6) ainsi que pour des composites témoins correspondant à des composites comprenant des renforts non tissés (R9 et R10) et des renforts tissés réalisés avec 100 % de lin (R1 et R4) et 100% de verre (R7 et R8). Le Tableau 4 ci-dessous récapitule les résultats obtenus.

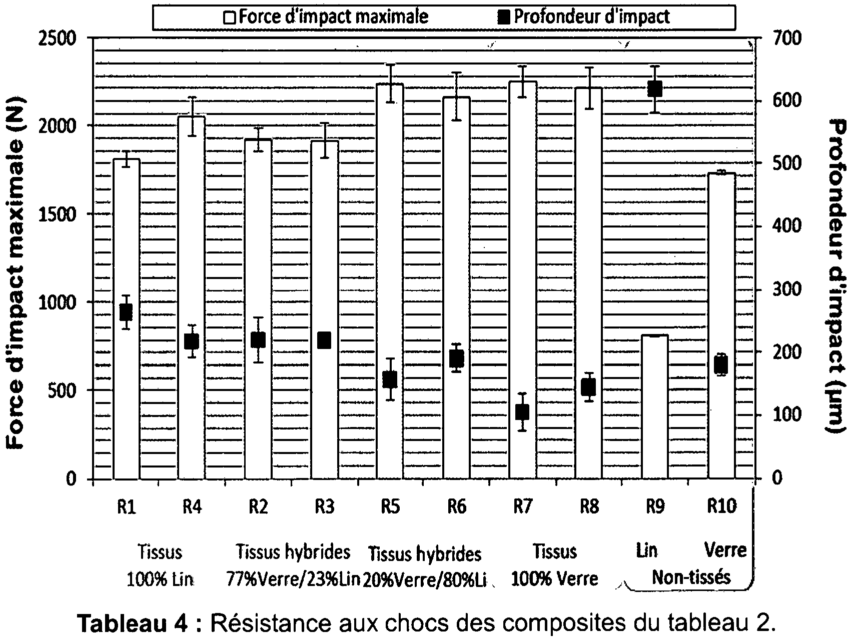

Comme on peut observer dans le Tableau 4 dans lequel sont données la force d'impact maximale et la profondeur d'impact pour chaque composite, les composites comprenant un renfort selon l'invention R5, R6 présentent une très bonne résistance aux chocs.

Les échantillons R1,R4,R2,R3, R7, R8,R9 et R10 ne sont pas selon l'invention. On notera que les composites R5 et R6 avec des teneurs en verre de 20 % présentent une excellente résistance aux chocs qui est comparable à la résistance aux chocs des échantillons tissés constitués à 100% de fils de verre.

Autrement dit, la résistance aux chocs des composites est conservée malgré le remplacement d'environ 80 % des fibres de verre par des fibres de lin, plus légères.

Les composites comprenant les renforts selon l'invention présentent à la fois d'excellentes propriétés mécaniques, comme une élasticité en flexion ou en traction satisfaisante, et une excellente résistance aux chocs. Ils sont plus légers que les composites équivalents renforcés par des textiles constitués de 100 % de fibres de verre.

## Revendications

1. Textile hybride comprenant des fils en fibres inorganiques et des fils en fibres organiques naturelles, les fils en fibres inorganiques et les fils en fibres organiques naturelles étant cotissés, cotressés ou cotricotés les uns avec les autres, **caractérisé par le fait qu'**il comprend entre 70 à 90 % en poids de fibres organiques naturelles et de 10 à 30 % en poids de fibres inorganiques, ces pourcentages étant exprimés par rapport à l'ensemble des fibres inorganiques et fibres organiques naturelles, et **par le fait que** les fibres organiques naturelles sont des fibres de lin et les fibres inorganiques sont des fibres de verre .

2. Textile hybride selon l'une quelconque des revendications précédentes **caractérisé en ce qu'**il comprend entre 80 et 90 % en poids de fibres organiques naturelles, et de 10 à 20 % en poids de fibres inorganiques, ces pourcentages étant exprimés par rapport à l'ensemble des fibres inorganiques et fibres organiques naturelles.

3. Textile hybride selon l'une quelconque des revendications précédentes, **caractérisé en ce que** les fils en fibres inorganiques et les fils en fibres organiques naturelles ont, indépendamment les uns des autres, une masse linéique comprise entre 500 et 3000 tex.

4. Textile hybride selon l'une quelconque des revendications précédentes, **caractérisé en ce que** la masse linéique des fils en fibres organiques est plus faible que celle des fils en fibres inorganiques.

5. Textile hybride selon l'une quelconque des revendications précédentes, **caractérisé en ce que** les fibres de verre ont un diamètre compris entre 5 et 24 µm.

6. Textile hybride selon l'une quelconque des revendications précédentes, **caractérisé en ce que** les fibres inorganiques et les fibres organiques naturelles sont traitées avec une composition d'ensimage.

7. Textile hybride selon l'une quelconque des revendications précédentes, **caractérisé en ce qu'**il présente :
- une épaisseur inférieure à 30 mm, de préférence comprise entre 0,2 mm et 5 mm, de préférence entre 1 mm et 4 mm, et encore plus préférentiellement comprise entre 1,5 et 3 mm ; et/ou
- une masse surfacique comprise entre 30 et 3000 g/m², de préférence comprise entre 100 et 2000 g/m², plus préférentiellement comprise entre 100 et 1200 g/m², et encore plus préférentiellement comprise entre 100 et 1000 g/m².

8. Préimprégné comprenant au moins un textile hybride selon l'une quelconque des revendications 1 à 7 et une résine thermoplastique ou thermodurcissable, la résine représentant de 20 à 45 en poids, de préférence de 25 à 40 % en poids du poids total du préimprégné.

9. Utilisation d'un textile hybride selon l'une quelconque des revendications 1 à 7 ou d'un préimprégné selon la revendication 7 pour la fabrication d'un composite comprenant une matrice de polymère organique et un renfort textile.

## Patentansprüche

1. Hybridtextil, umfassend Fäden aus anorganischen Fasern und Fäden aus natürlichen organischen Fasern, wobei die Fäden aus anorganischen Fasern und die Fäden aus natürlichen organischen Fasern verwoben, verflochten oder verstrickt sind, **dadurch gekennzeichnet, dass** es zu zwischen 70 bis 90 Gew.-% natürliche organische Fasern und zu 10 bis 30 Gew.-% anorganische Fasern umfasst, wobei diese Prozentsätze in Bezug auf die Gesamtheit von anorganischen Fasern und natürlichen organischen Fasern ausgedrückt sind, und dass die natürlichen organischen Fasern Flachsfasern sind und die anorganischen Fasern Glasfasern sind.

2. Hybridtextil nach einem der vorstehenden Ansprüche
**dadurch gekennzeichnet, dass** es zu zwischen 80 und 90 Gew.-% natürliche organische Fasern und zu 10 bis 20 Gew.-% anorganische Fasern umfasst, wobei diese Prozentsätze in Bezug auf die Gesamtheit von anorganischen Fasern und natürlichen organischen Fasern ausgedrückt sind.

3. Hybridtextil nach einem der vorstehenden Ansprüche,
**dadurch gekennzeichnet, dass** die Fäden aus anorganischen Fasern und die Fäden aus natürlichen organischen Fasern unabhängig voneinander eine Feinheit zwischen 500 und 3000 tex besitzen.

4. Hybridtextil nach einem der vorstehenden Ansprüche,
**dadurch gekennzeichnet, dass** die Feinheit der Fäden aus organischen Fasern geringer als die der Fäden aus anorganischen Fasern ist.

5. Hybridtextil nach einem der vorstehenden Ansprüche,
**dadurch gekennzeichnet, dass** die Glasfasern einen Durchmesser zwischen 5 und 24 µm besitzen.

6. Hybridtextil nach einem der vorstehenden Ansprüche,
**dadurch gekennzeichnet, dass** die anorganischen Fasern und die natürlichen organischen Fasern mit einer Schlichtezusammensetzung behandelt werden.

7. Hybridtextil nach einem der vorstehenden Ansprüche,
**dadurch gekennzeichnet, dass** es vorweist:
- eine Dicke von weniger als 30 mm, vorzugsweise zwischen 0,2 mm und 5 mm, vorzugsweise zwischen 1 mm und 4 mm, und noch stärker bevorzugt zwischen 1,5 und 3 mm; und/oder
- eine flächenbezogene Masse zwischen 30 und 3000 g/m², vorzugsweise zwischen 100 und 2000 g/m², stärker bevorzugt zwischen 100 und 1200 g/m² und noch stärker bevorzugt zwischen 100 und 1000 g/m².

8. Prepreg, umfassend mindestens ein Hybridtextil nach einem der Ansprüche 1 bis 7 und ein thermoplastisches oder thermohärtbares Harz, wobei das Harz 20 bis 45 Gew.-%, vorzugsweise 25 bis 40 Gew.-% des Gesamtgewichts des Prepregs ausmacht.

9. Verwendung eines Hybridtextils nach einem der Ansprüche 1 bis 7 oder eines Prepregs nach Anspruch 7 für die Herstellung eines Verbundwerkstoffs, umfassend eine Matrix aus organischem Polymer und eine Textilverstärkung.

## Claims

1. A hybrid textile comprising yarns based on inorganic fibers and yarns based on natural organic fibers the yarns based on inorganic fibers and the yarns based on natural organic fibers being co-woven, co-braided or co-knitted with one another, **characterized in that** it comprises between 70 and 90 wt% of natural organic fibers, and from 10 to 30 wt% of inorganic fibers, these percentages being expressed relative to the whole of the inorganic fibers and natural organic fibers and by the fact that the natural organic fibers are flax fibers and the inorganic fibers are glass fibers.

2. The hybrid textile as claimed in any one of the preceding claims, **characterized in that** it comprises between 80 and 90 wt% of natural organic fibers, and from 10 to 20 wt% of inorganic fibers, these percentages being expressed relative to the whole of the inorganic fibers and natural organic fibers.

3. The hybrid textile as claimed in any one of the preceding claims, **characterized in that** the yarns based on inorganic fibers and the yarns based on natural organic fibers have, independently of one another, a linear weight between 500 and 3000 tex.

4. The hybrid textile as claimed in any one of the preceding claims, **characterized in that** the linear weight of the yarns based on organic fibers is lower than that of the yarns based on inorganic fibers.

5. The hybrid textile as claimed in any one of the preceding claims, **characterized in that** the glass fibers have diameter comprised between 5 and 24 µm.

6. The hybrid textile as claimed in any one of the preceding claims, **characterized in that** the inorganic fibers and the organic natural fibers are treated with a sizing composition.

7. The hybrid textile as claimed in any one of the preceding claims, **characterized in that** it has:
- a thickness below 30 mm, preferably between 0.2 mm and 5 mm, preferably between 1 mm and 4 mm, and even more preferably between 1.5 and 3 mm; and/or
- a weight per unit area between 30 and 3000 g/m², preferably between 100 and 2000 g/m², more preferably between 100 and 1200 g/m², and even more preferably between 100 and 1000 g/m².

8. A prepreg comprising at least one hybrid textile as claimed in any one of claims 1 to 7 and a thermoplastic or thermosetting resin, the resin representing from 20 to 45 wt%, preferably from 25 to 40 wt% of the total weight of the prepreg.

9. The use of a hybrid textile as claimed in any one of claims 1 to 7 or of a prepreg as claimed in claim 8 for the manufacture of a composite comprising an organic polymer matrix and a textile reinforcement.
